# EUROPEAN PATENT APPLICATION

(11) **EP 3 696 591 A1**
(43) Date of publication of application: **19.08.2020**
(21) Application number: 19157078.7
(22) Date of filing: 14.02.2019
(51) Int. Cl.: G02B 19/00, G02B 3/00

(54) **A MONOLITHIC LENS PLATE AND A LIGHTING DEVICE COMPRISING THE MONOLITHIC LENS PLATE**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

There is provided monolithic lens plate (100) which comprises a first lens (101) and a second lens (102) on a base plate (103), and a slit (104) located between the first lens (101) and second lens (102) and having a slit bottom (SB). In a plane perpendicular to the base plate (103): the first lens (101) has a cross section with a first top surface (104) having a first shape (105); the second lens (102) has a cross section with a second top surface (106) having a second shape (107); the slit (104) has a cross section with a first wall (108) intersecting the first top surface (104) in a first point (A), and with a second wall (109) intersecting the second top surface (106) in a second point (B). The first point (A) is located at a non-zero distance (D) with respect to the second point (B). The first shape (105) is defined by a first mathematical function (110), and the second shape (107) is defined by a second mathematical function (111). An intersection (I) of the first mathematical function (110) and the second mathematical function (111) is located between the first point (A) and the second point (B), and above the slit bottom (SB).

## Description

### FIELD OF THE INVENTION

The present invention generally relates to a monolithic lens plate. The present invention further relates to a lighting device comprising said monolithic lens plate.

### BACKGROUND OF THE INVENTION

Monolithic lens plates are used for beam shaping, e.g. collimating, light emitting diode, LED, light. A monolithic lens plate comprises a plurality of lenses on a base plate and is used to shape the LED light emitted by a plurality of LEDs. Typically, light emitted by each individual LED (or LED package, e.g. an RGB LED package) is collimated by an individual lens.

In order to improve brightness, the pitch between the LEDs is reduced. High reduction in LED pitch requires overlapping lenses. However, a drawback of this solution is that when using lens plates with overlapping lenses these lenses are causing large warpage problems. Warpage is a distortion where the surfaces of the molded part do not follow the intended shape of the design. Warpage results from molded-in residual stresses, which, in turn, is caused by differential shrinkage of material in the molded part. A warped monolithic lens plate negatively impacts the beam shaping performance of the monolithic lens plate.

### SUMMARY OF THE INVENTION

It is therefore an object of the present invention to provide an improved monolithic lens plate with reduced warpage.

The present invention discloses a monolithic lens plate in accordance with the independent claim 1. Preferred embodiments are defined by the dependent claims.

According to a first aspect of the invention, a monolithic lens plate is provided. The monolithic lens plate comprises a first lens and a second lens on a base plate, and a slit located between the first lens and second lens and having a slit bottom. In a plane perpendicular to the base plate the first lens has a cross section with a first top surface and has a first shape. In a plane perpendicular to the base plate the second lens has a cross section with a second top surface and has a second shape. In a plane perpendicular to the base plate the slit has a cross section with a first wall intersecting the first top surface in a first point (A), and with a second wall intersecting the second top surface in a second point (B). The first point (A) is located at a non-zero distance (D) with respect to the second point (B). The first shape is defined by a first mathematical function, and the second shape is defined by a second mathematical function. An intersection (I) of the first mathematical function and the second mathematical function is located between the first point (A) and the second point (B), and above the slit bottom (SB).

Hence the invention provides a monolithic lens plate that is able to provide reduced warpage. It provides reduced warpage in a situation wherein the optical functions of neighboring lenses overlap. The reason is that instead of a monolithic lens plate with overlapping lenses, a lens plate having lenses with slits between the lenses is used which reduces warpage in the lens plate. The slit or slits need to have particular shapes and dimensions which will be described in the remainder of the patent application to further reduce warpage and/or improve beam shaping of the monolithic lens plate. The lens plate according to the invention is suitable for high brightness lighting application because it has a high lens density (i.e. a high the number of lenses per unit area). In case of a high lens density a high LED density (i.e. small LED pitch) can be used.

Monolithic lens plate known from the prior art have either (i) individual lenses on a base plate i.e. lenses which are not overlapping, or (ii) lenses on a base plate wherein the lenses overlap. Individual lenses on a base plate (configuration i) do not provide warpage but also do not provide a high lens density. I.e. a monolithic lens plate according to configuration i cannot be used for high brightness lighting applications. Lenses on a base plate wherein the lenses overlap (configuration ii) can be used for high brightness lighting applications but have the problem of warpage. The monolithic lens plate will be warped after manufacturing it e.g. using injection molding.

The intersection (I) may be the intersection of the (virtual) tangent line extensions (VT1, VT2) of the first shape at first point A and the second shape at second point B of two neighboring lenses. It may be defined in a direction of a lens row formed by the first lens and the second lens.

The monolithic lens plate might have the feature wherein the first shape is a first curved shape and the second shape is a second curved shape. The obtained effect in beam shaping or collimation of light in at least two directions. Collimate in this respect means make part of the light rays mutually parallel and/or reduce mutually angles between part of the light rays. The reason is that the lens is curved in a first direction and the lens is curved in a second direction perpendicular to the first direction.

The top surface of first lens may be convex. The top surface of the second lens may be convex. The top surface of first lens may be convex in a first direction and in a second direction. The top surface of the second lens may be convex in a first direction and in a second direction.

The monolithic lens plate might have the feature wherein the first shape is a first flat shape and the second shape is a second flat shape. The obtained effect in beam shaping of light in mainly in one first directions. The reason is that the lens is curved in a first direction and the lens is curved in a second direction perpendicular to the first direction.

The monolithic lens plate might have the feature wherein the base plate has a first surface and a second surface, and a base plate thickness (T) which is the distance between the first surface and the second surface. The second surface is furthest away from the first lens and second lens. Each lens has a lens top, a lens length, and a lens width, and a lens height (H1). The lens height (H1) is the distance between the lens top and the second surface. The slit has a slit depth. The slit depth (SD) is the distance between the slit bottom (SB) and the intersection (I). The intersection (I) is preferably located below the lens top.

The monolithic lens plate might have the feature wherein the base plate has a first surface and a second surface, and a base plate thickness being the distance between the first surface and the second surface. The second surface is furthest away from the first lens and second lens. Each lens has a lens top, a lens length, a lens width, and a lens height. The lens height is the distance between the lens top and the second surface. The slit has a slit depth. The slit depth is the distance between the slit bottom (SB) and the intersection (I). The slit depth (SD) is equal or larger than 0.2 times the lens height (H1). The slit depth (SD) is equal or smaller that the lens height (H1). Or mathematically expressed: wherein 0.2*H1 ≤ SD ≤ H1. Preferably, the equation may be 0.3*H1 ≤ SD ≤ 0.9*H1. More preferably, the equation may be 0.4*H1 ≤ SD ≤ 0.8*H1. The obtained effect is reduced warpage, improved beam shaping and a robust, mechanical stable monolithic lens plate. The reason is that the slits with substantial depth reduced warpage, the lenses are curved in two directions, and the monolithic lens plate has substantial base plate thickness.

The monolithic lens plate might have the feature wherein the distance between the first point (A) and the second point (B) is in the range of 0.1 to 5 mm. Preferably, the distance between the first point (A) and the second point (B) is in the range of 0.1 to 3 mm. More preferably, the distance between the first point (A) and the second point (B) is in the range of 0.1 to 2 mm. Most preferably, the distance between the first point (A) and the second point (B) is in the range of 0.1 to 1.5 mm such as for example 1 mm. The obtained effect is improved beam shaping. The reason is that by decreasing the distance between point A and point B, the optical area of the lenses is increased (relatively).

The monolithic lens plate might have the feature wherein the base plate thickness (T) is in the range from 1 to 6 mm, and H1 is in the range from 4 to 50 mm. Preferably, the base plate thickness (T) is in the range from 1 to 4 mm, and H1 is in the range from 4 to 30 mm. More preferably, the base plate thickness (T) is in the range from 1 to 3 mm, and HI is in the range from 4 to 25 mm. Most preferably, the base plate thickness (T) is in the range from 1 to 2 mm, and HI is in the range from 4 to 20 mm. The obtained effect is a more compact monolithic lens plate. The reason is that a thinner monolithic lens plate is used.

The monolithic lens plate might have the feature wherein the lens length (L1) is in the range from 5 and 50 mm and the lens width (W1) is in the range from 5 to 50 mm. Preferably, L1 is in the range from 5 to 40 mm and W1 is in the range from 5 to 40 mm. More preferably, L1 is in the range from 5 to 30 mm and W1 is in the range from 5 to 30 mm. Most preferably, L1 is in the range from 5 to 20 mm and W1 is in the range from 5 to 20 mm. The obtained effect is a more compact monolithic lens plate. The reason is that a smaller lenses are used.

The monolithic lens plate might have the feature wherein the slit bottom (SB) is located above the first surface of the base plate. The obtained effect is improved mechanical stability of the monolithic lens plate.

The monolithic lens plate might have the feature wherein the slit bottom (SB) is located below the first surface of the base plate. The obtained effect is further reduction of warpage. The reason is that slits with a larger slit depth are being used.

The monolithic lens plate might have the feature wherein the slit (104) is a through hole in the base plate. The monolithic lens plate may also comprise slits with through holes and slits without through holes.

The monolithic lens plate might have the feature wherein the lens length (L1) and lens with (W1) having the following relative dimensions: L1 ≤ 0.8*W1 or L1 ≥ 1.2*W1. More preferably, L1 ≤ 0.6*W1 or L1 ≥ 1.4*W1. Most preferably, L1 ≤ 0.5*W1 or L1 ≥ 1.5*W1. The obtained effect is improved beam shaping. The reason is that for some lighting applications elongated lenses are required which e.g. provide an anisotropic distribution.

The monolithic lens plate might have the feature wherein the monolithic lens plate comprises a linear lens array which comprises the first lens, the second lens, and at least three further lenses. Preferably, the monolithic lens plate comprises a linear lens array which comprises the first lens, the second lens, and at least five further lenses. More preferably, the monolithic lens plate comprises a linear lens array which comprises the first lens, the second lens, and at least ten further lenses. Most preferably, the monolithic lens plate comprises a linear lens array which comprises the first lens, the second lens, and at least twelve further lenses. The obtained effect is improved beam shaping. The reason is that a lighting device comprising many LEDs can be used.

The monolithic lens plate might have the feature wherein the monolithic lens plate comprises more than one linear lens arrays such as for example two, three, four, five or six linear lens arrays. The linear lens arrays may be arranged at a non-zero distance. The linear lens arrays may be arranged from each other at a gap (G1). The gap is preferably at least one times the lens width (W1), more preferably at least two times the lens width (W1), most preferably at least three times the lens width (W1).

The monolithic lens plate might have the feature wherein the at least three further lenses (117) having slits as being defined in any one of the previous features / embodiments. The obtained effect is improved beam shaping. The reason is that a lighting device comprising many LEDs can be used.

The monolithic lens plate might have the feature wherein the slit or slits are tapering in a direction from intersection (I) to the slit bottom (SB) at a tapering angle (θ) in the range from 0.5 to 10 degrees. Preferably, the slit or slits are tapering in a direction from intersection (I) to the slit bottom (SB) at a tapering angle (θ) in the range from 0.5 to 7 degrees. More preferably, the slit or slits are tapering in a direction from intersection (I) to the slit bottom (SB) at a tapering angle (θ) in the range from 0.5 to 5 degrees. Most preferably, the slit or slits are tapering in a direction from intersection (I) to the slit bottom (SB) at a tapering angle (θ) in the range from 0.5 to 3 degrees such as for example 1 or 0.5 degrees. The obtained effect is improved beam shaping. The reason is that by decreasing the tapering angle (θ), the optical area of the lenses is increased (relatively).

In order to further reduce the warpage, a pressure leader may be added in the monolitic lens plate to actively control the lens pressure during injection molding. The pressure leader may be arranged perpendicular to the linear lens array. The pressure leader is preferably direct connected to the lenses. The diameter of the pressure leader is at least 2 times the thickness of the base plate. The pressure leader will just solidify after the lenses are solidified. This means that one has active pressure control over the lenses, and thus control shrink a and w in the monolitic lens plate.

The present invention discloses a LED lighting device in accordance with claim 15. The LED lighting device might have the feature that the LED lighting device comprises the monolithic lens plate. The LED lighting device comprises the monolithic lens plate and a plurality of LED light sources. Each LED light source emits LED light source light. The lens plate is configured to redirect the LED light source light. The obtained effect is that a lighting device with improved beam shaping. The reason is that a warped monolithic lens plate negatively impacts the beam shaping performance of the monolithic lens plate.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-b show schematic cross sections in a first direction of monolithic lens plates of the prior art.
Figs. 2a-b show simulations of monolithic lens plates of the prior art.
Fig. 3a shows a schematic cross section in a first direction of a monolithic lens plate according to an embodiment of the present invention.
Fig. 3b shows a schematic cross section in a first direction of a part of a monolithic lens plate according to an embodiment of the present invention.
Fig. 3c shows a schematic cross section in a second direction of a part of a monolithic lens plate according to an embodiment of the present invention.
Fig. 3d shows a schematic top view of a monolithic lens plate according to an embodiment of the present invention.
Fig. 3e shows a schematic top view of a monolithic lens plate according to an embodiment of the present invention.
Fig. 3f shows a schematic cross section in a first direction of a part of a monolithic lens plate according to an embodiment of the present invention.
Fig. 3g shows a schematic cross section in a first direction of a monolithic lens plate according to an embodiment of the present invention.
Fig. 3h shows a schematic cross section in a first direction of a monolithic lens plate according to an embodiment of the present invention.
Fig. 4 shows a schematic cross section in a first direction of a lighting device comprising a monolithic lens plate according to an embodiment of the present invention.
Figs. 5a-b shows simulation of a monolithic lens plate according to an embodiment of the present invention.

The schematic drawings are not necessarily on scale.

The same features having the same function in different figures are referred to the same references.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and convey the scope of the invention to the skilled person.

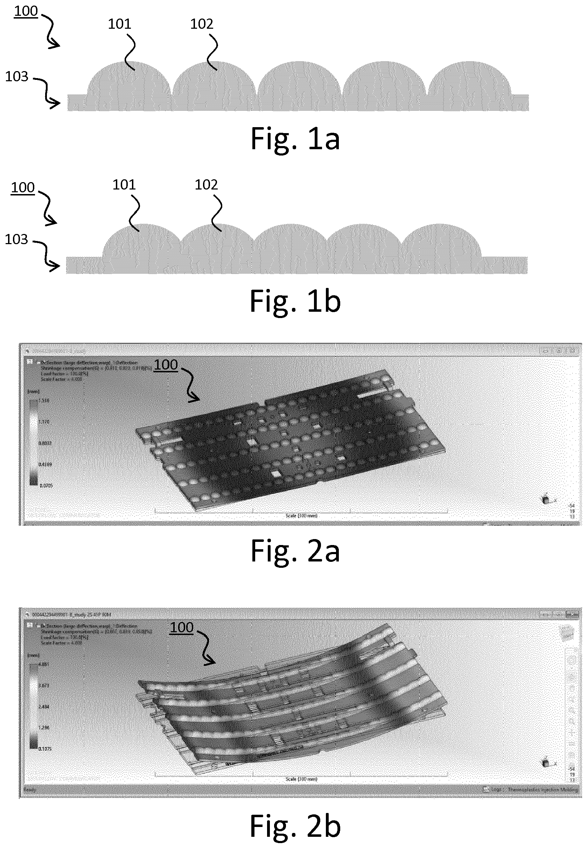

Figs. 1a-b show schematic cross sections in a first direction DR1 of monolithic lens plates 100 of the prior art. Fig. 1a shows a monolithic lens plate 100 known from the prior art which has individual lenses 101, 102 on a base plate 103 i.e. lenses 101, 102 which are not overlapping. Monolithic lens plates 100 according to this configuration cannot be used for high brightness lighting applications. The reason is that the pitch between the lenses 101, 102 and thus between the LEDs is too large. Fig. 1b shows a monolithic lens plate 100 known from the prior art which has lenses 101, 102 on a base plate 103 wherein the lenses 101, 102 overlap. Lenses 101, 102 on a base plate 103 wherein the lenses 101, 102 overlap can be used for high brightness lighting applications but have the problem of warpage. The monolithic lens plate 100 will be warped after manufacturing it e.g. with injection molding.

Figs. 2a-b show simulations of monolithic lens plates 100 of the prior art. Fig. 2a shows a simulation of a monolithic lens plate 100 of the prior art. As indicated above it shows a monolithic lens plate 100 known from the prior art which has individual lenses 101, 102 on a base plate 103 i.e. lenses 101, 102 which are not overlapping. Monolithic lens plates 100 according to this configuration cannot be used for high brightness lighting applications. The reason is that the pitch between the lenses 101, 102 and thus between the LEDs is too large. Fig. 2b shows a simulation of a monolithic lens plate 100 of the prior art. As indicated above it shows a monolithic lens plate 100 known from the prior art which has lenses 101, 102 on a base plate 103 wherein the lenses 101, 102 overlap. Lenses 101, 102 on a base plate 103 wherein the lenses 101, 102 overlap can be used for high brightness lighting applications but have the problem of warpage. The monolithic lens plate 100 will be warped after manufacturing it e.g. with injection molding as is clearly shown by the simulation.

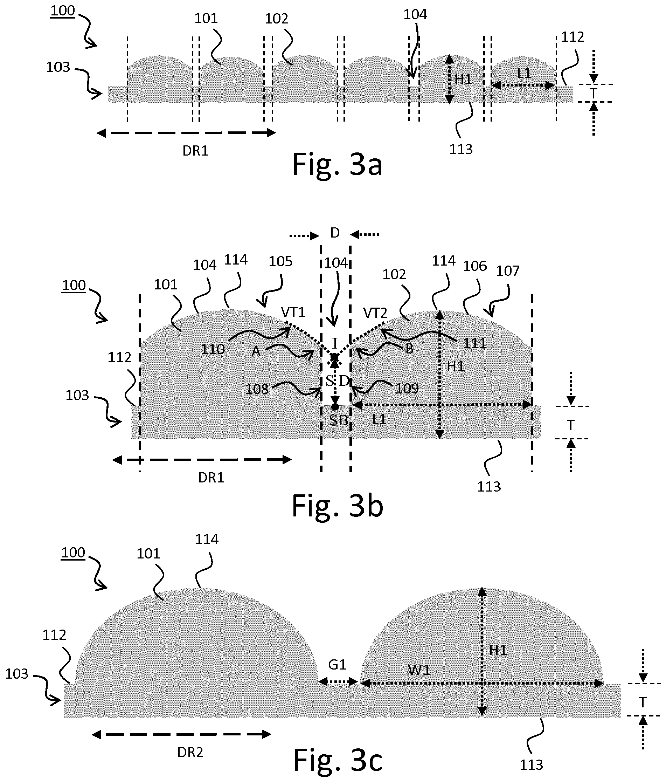

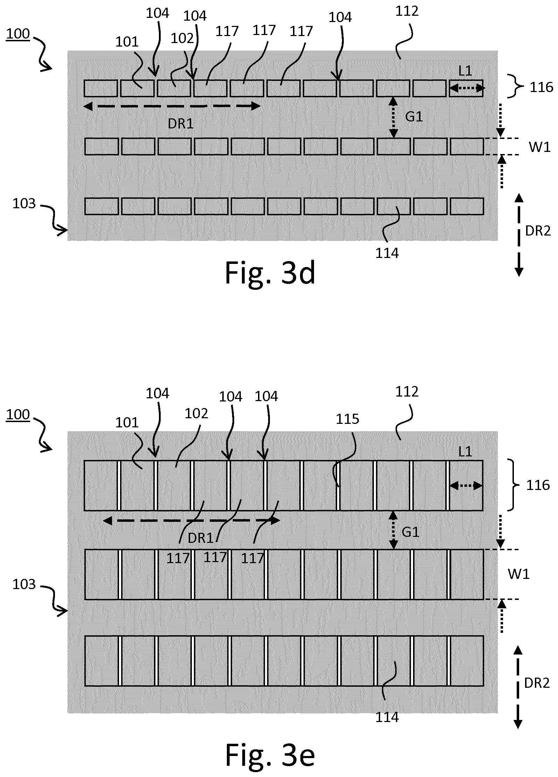

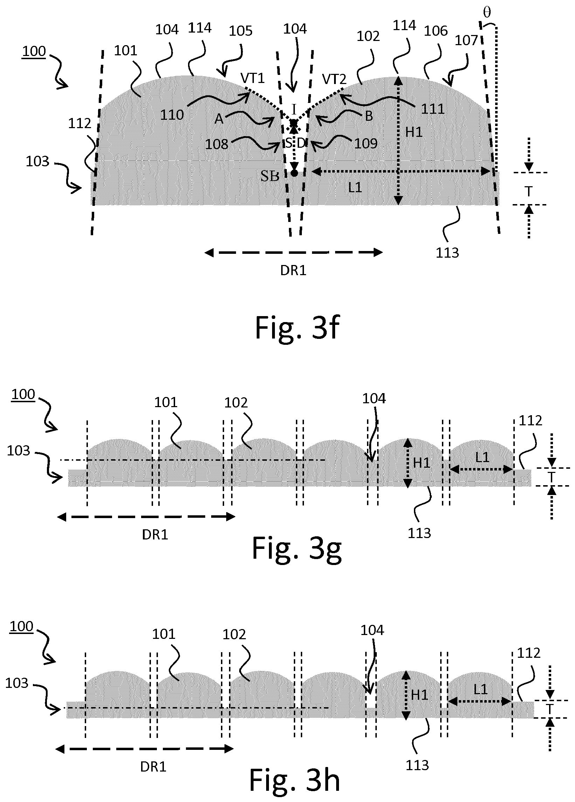

Fig. 3 shows (parts of) monolithic lens plates according to embodiments of the present invention. Fig. 3a shows a schematic cross section in a first direction DR1 of a monolithic lens plate according to an embodiment of the present invention. Fig. 3b shows a schematic cross section in a first direction DR1 of a part of a monolithic lens plate according to an embodiment of the present invention. Fig. 3c shows a schematic cross section in a second direction DR2 of a part of a monolithic lens plate according to an embodiment of the present invention. The second direction DR2 is perpendicular to the first direction DR1. Fig. 3d shows a schematic top view of a monolithic lens plate according to an embodiment of the present invention. Fig. 3e shows a schematic top view of a monolithic lens plate according to an embodiment of the present invention. Fig. 3f shows a schematic cross section in a first direction DR1 of a part of a monolithic lens plate according to an embodiment of the present invention. Fig. 3g shows a schematic cross section in a first direction DR1 of a monolithic lens plate according to an embodiment of the present invention. Fig. 3h shows a schematic cross section in a first direction DR1 of a monolithic lens plate according to an embodiment of the present invention.

As depicted in Fig. 3, the monolithic lens plate 100 comprises a first lens 101 and a second lens 102 on a base plate 103, and a slit 104 located between the first lens 101 and second lens 102 and having a slit bottom SB. In a plane perpendicular to the base plate 103 the first lens 101 has a cross section with a first top surface 104 which has a first shape 105. In a plane perpendicular to the base plate 103 the second lens 102 has a cross section with a second top surface 106 having a second shape 107. In a plane perpendicular to the base plate 103 the slit 104 has a cross section with a first wall 108 intersecting the first top surface 104 in a first point A, and with a second wall 109 intersecting the second top surface 106 in a second point B. The first point A is located at a non-zero distance D with respect to the second point B. The first shape 105 is defined by a first mathematical function 110, and the second shape 107 is defined by a second mathematical function 111. An intersection I of the first mathematical function 110 and the second mathematical function 111 is located between the first point A and the second point B, and above the slit bottom SB.

As depicted in Fig. 3 and in particular Fig. 3b and Fig. 3f, the intersection I of may be the intersection of the virtual tangent extensions VT1, VT2 of the first shape 105 and the second shape 107 of two neighboring lenses 101, 102. It may be defined in a direction of a lens row formed by the first lens and the second lens.

As depicted in Fig. 3 and in particular Fig. 3a, Fig. 3b, and Fig. 3f, in a first direction DR1 the first shape 105 is a first curved shape and the second shape 107 is a second curved shape.

In a first direction DR1, the first shape 105 may also have a first flat shape and the second shape 107 is a second flat shape.

As depicted in Fig. 3, the base plate 103 has a first surface 112 and a second surface 113, and a base plate thickness T which is the distance between the first surface 112 and the second surface 113, wherein the second surface 113 is furthest away from the first lens 101 and second lens 102. Each lens 101, 102 has a lens top 114, a lens length L1, and a lens width W1, and a lens height H1. H1 is the distance between the lens top 114 and the second surface 113. The slit 104 has a slit depth SD. The slit depth SD is the distance between the slit bottom SB and the intersection I. The slit depth (SD) may be equal or larger than 0.2 times the lens height (HI). The slit depth (SD) is equal or smaller that the lens height (HI). Or mathematically expressed: wherein 0.2*H1 ≤ SD ≤ H1.

As depicted in Fig. 3, and in particular Fig.3b, the distance D between the first point A and the second point B is preferably in the range of 0.1 to 3 mm.

As depicted in Fig. 3, and in particular Fig. 3b, base plate thickness T is in the range from 1 to 6 mm, and HI is in the range from 4 to 50 mm.

As depicted in Fig. 3, and in particular Fig. 3b, the lens length L1 is preferably in the range from 5 and 50 mm and W1 is preferably in the range from 5 to 50 mm.

As depicted in Fig. 3g, the slit bottom SB may be located above the first surface 112.

As depicted in Fig. 3h, the slit bottom B may also be located below the first surface 112.

As depicted in Fig. 3e, the slit 104 may be a through hole 115 in the base plate 103.

As depicted in Fig. 3d and Fig. 3e, L1 ≤ 0.8*W1 or L1 ≥ 1.2*W1.

As depicted in Fig.3d and Fig.3e, a linear lens array 116 may comprise the first lens 101, the second lens 102, and at least three further lenses 117. The at least three further lenses 117 may have slits 104 as defined according to one or more of the embodiments here above.

As depicted in Fig. 3f, the slits 104 may be tapering in a direction from I to SB at a tapering angle θ in the range from 0.5 to 10 degrees.

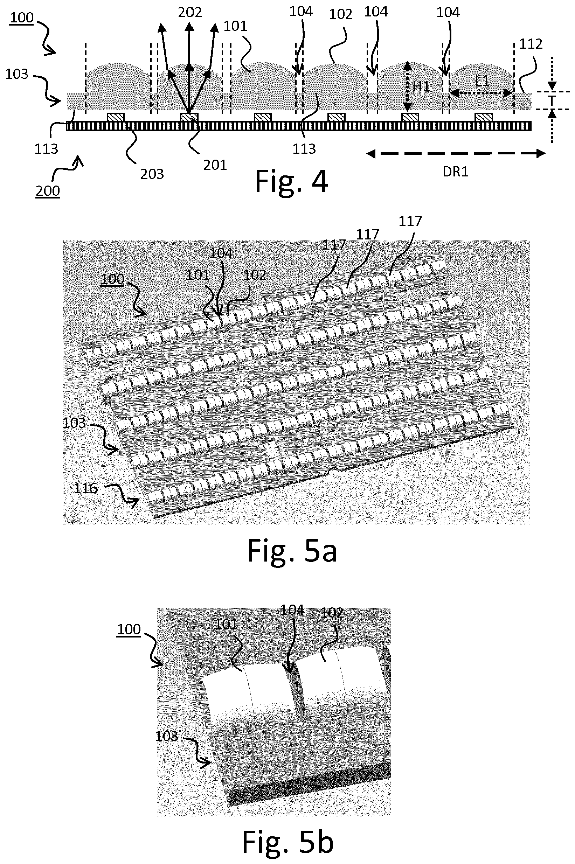

Fig. 4 shows a schematic cross section in a first direction DR1 of a lighting device 200 comprising a monolithic lens plate 100 according to an embodiment of the present invention. The LED lighting device 200 comprises the monolithic lens plate 100 according to any one of the preceding embodiments. The lighting device 200 comprises a plurality of LED light sources 201 each LED light source 201 which emit LED light source light 202. The lens plate 100 is configured to redirect the LED light source light 202. The LED light sources 201 are typically arranged on a substrate 203. The substrate 203 may comprises electrodes for powering the LED light sources 202. The LED lighting device may be used in a luminaire. The LED light sources may emit white light or colored light. The LED light sources may be phosphor converted LED light sources or direct emitting LED light sources. A LED light source may consist of multiple LED dyes emitting different colors e.g. a Red Green Blue RGB LED package. The white light has preferably a color temperature within 10 SDCM from the black body locus (BBL). More preferably, the white light has preferably a color temperature within 7 SDCM from the BBL. Most preferably, the white light has preferably a color temperature within 5 SDCM from the BBL. The color temperature of the white light is preferably in the range from 2000 K to 10000 K, more preferably in the range from 2500 K to 6000 K, most preferably in the range from 2700 K to 5000 K. The color rendering index is preferably higher than 70, more preferably higher than 75, most preferably higher than 80 such as for example 85 or 90.

Figs. 5a-b show simulation of a monolithic lens plate according to an embodiment of the present invention. Fig. 5a shows a monolithic lens plate having 5 linear lens arrays 116. Each lens array comprises a first lens 101 and a second lens and twenty-two further lenses 117.

The monolithic lens plate can be made from a polymer such as for example of polycarbonate, or polymethylmethacrylate.

The term "substantially" herein, such as in "substantially all light" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications

## Claims

1. A monolithic lens plate (100) comprising:
- a first lens (101) and a second lens (102) on a base plate (103), and a slit (104) located between the first lens (101) and second lens (102) and having a slit bottom (SB);
wherein, in a plane perpendicular to the base plate (103):
- the first lens (101) has a cross section with a first top surface (104) having a first shape (105),
- the second lens (102) has a cross section with a second top surface (106) having a second shape (107),
- the slit (104) has a cross section with a first wall (108) intersecting the first top surface (104) in a first point (A), and with a second wall (109) intersecting the second top surface (106) in a second point (B);
wherein the first point (A) is located at a non-zero distance (D) with respect to the second point (B);
wherein the first shape (105) is defined by a first mathematical function (110), and the second shape (107) is defined by a second mathematical function (111); and
wherein an intersection (I) of the first mathematical function (110) and the second mathematical function (111) is located between the first point (A) and the second point (B), and above the slit bottom (SB).

2. The monolithic lens plate according to claim 1, wherein the first shape (105) is a first curved shape and the second shape (107) is a second curved shape.

3. The monolithic lens plate according to claim 1, wherein the first shape (105) is a first flat shape and the second shape (107) is a second flat shape.

4. The monolithic lens plate (100) according to any one of the preceding claims, wherein the base plate (103) having a first surface (112) and a second surface (113), and a base plate thickness (T) being the distance between the first surface (112) and the second surface (113), wherein the second surface (113) is furthest away from the first lens (101) and second lens (102);
- wherein each lens (101, 102) having a lens top (114), a lens length (L1), and a lens width (W1), and a lens height (H1),
- wherein HI is the distance between the lens top (114) and the second surface (113),
- wherein the slit (104) have a slit depth (SD), wherein the slit depth (SD) being the distance between the slit bottom (SB) and the intersection (I); and
- wherein 0.2*H1 ≤ SD ≤ H1.

5. The monolithic lens plate (100) according to claim 4, wherein the distance (D) between the first point (A) and the second point (B) is in the range of 0.1 to 3 mm.

6. The monolithic lens plate (100) according to claim 4, wherein base plate thickness T is in the range from 1 to 6 mm, and lens height (H1) is in the range from 4 to 50 mm.

7. The monolithic lens plate (100) according to claim 4, wherein lens length (L1) is in the range from 5 and 50 mm and lens width (W1) is in the range from 5 to 50 mm.

8. The monolithic lens plate (100) according to claim 4, wherein the slit bottom (SB) is located above the first surface (112).

9. The monolithic lens plate (100) according to claim 4, wherein slit bottom (SB) is located below the first surface (112).

10. The monolithic lens plate (100) according to any one of the preceding claims, wherein the slit (104) is a through hole (115) in the base plate (103).

11. The monolithic lens plate (100) according to claim 4, wherein L1 ≤ 0.8*W1 or L1 ≥ 1.2*W1.

12. The monolithic lens plate (100) according to any one of the preceding claims, comprising a linear lens array (116) comprising the first lens (101), the second lens (102), and at least three further lenses (117).

13. The monolithic lens plate (100) according to claim 12, wherein the at least three further lenses (117) having slits (104) as being defined in any one of the claims 1 - 12.

14. The monolithic lens plate (100) according to any one of the preceding claims, wherein the slits (104) are tapering in a direction from I to SB at a tapering angle (θ) in the range from 0.5 to 10 degrees.

15. A LED lighting device (200) comprising the monolithic lens plate (100) according to any one of the preceding claims and a plurality of LED light sources (201) each LED light source (201) emitting LED light source light (202), wherein the lens plate (100) is configured to redirect the LED light source light (202).
